# EUROPEAN PATENT APPLICATION

(11) **EP 1 473 650 A1**
(43) Date of publication of application: **03.11.2004**
(21) Application number: 04005501.4
(22) Date of filing: 08.03.2004
(51) Int. Cl.: G06F 17/60

(54) **System and method for faciliting interaction between an individual present at a physical location and a telecommuter**

(30) Priority: 25.03.2003 US 395997
(71) Applicant: ALCATEL, 75008 Paris (FR)
(72) Inventor: Badt, Sig, Harold, Jr., TX 75081 Richardson (US)
(74) Representative: Dreiss, Fuhlendorf, Steimle & Becker

(57) **Abstract**

A system and method for facilitating interaction between an individual present at a physical location and a telecommuter. In one embodiment, a complex map is created that includes a real component that represents the individual's presence at the physical location and a virtual component that represents the telecommuter's presence at the physical location. The complex map is maintained during communications between the individual and the telecommuter.

## Description

### BACKGROUND OF THE INVENTION

### Technical Field of the Invention

The present invention generally relates to telecommuting. More particularly, and not by way of any limitation, the present invention is directed to a system and method for facilitating interaction between an individual present at a physical location and a telecommuter.

### Description of Related Art

Telecommuting may be loosely defined as the process of commuting to the office through transferring information over a communications link, rather than going to the physical workplace or the office. Typically, telecommuting involves performing work away from the principal office, in a location such as a home or a telecenter located near the home. To an organization, telecommuting, which brings work closer to the employee's residence, offers flexible workplace arrangements that can help organizations recruit and retain key personnel, increase accessibility for all employees, improve office productivity, increase use of new technology, and reduce facilities costs. Additional benefits to telecommuters may include increased job satisfaction, reduced commuting time and transportation costs, diminished stress, improved quality of life and improved family functioning. Societal contributions of telecommuting include environmental and energy conservation, less traffic congestion on area highways, reduced family stress, increased civic involvement in local communities and improved economic development at local and regional levels.

Despite the potential benefits telecommuting offers, several limitations and drawbacks prevent existing telecommuting systems from fully realizing these benefits. Existing telecommuting systems have been unable to accommodate and integrate in a meaningful unified work environment both workers who are physically present and workers who are virtually present. Presently, a telecommuter is not able to participate in all the interactions in which a physically present individual can participate. In particular, existing telecommuting systems are not capable of providing telecommuters access to formal activities such as planned conferences and informal activities such as impromptu conversations and spontaneous meetings. In such systems, employees are forced to choose between the inconvenience of physically commuting to obtain full employee interaction and the convenience of telecommuting at a cost of a loss of employee interaction.

### SUMMARY OF THE INVENTION

Accordingly, the present invention is directed to a system and method for telecommuting that overcomes the limitations and drawbacks of the existing telecommuting systems by facilitating interaction between an individual present at a physical location and a telecommuter. The present invention enables individuals present at a physical location and telecommuters to participate in a variety of interactive exchanges of a traditional work environment.

In one aspect, the present invention is directed to a system for facilitating interaction between an individual present at a physical location and a telecommuter. The system comprises means for creating a complex map that includes a real component representing at least the individual's presence at the physical location and a virtual component representing at least the telecommuter's virtual presence at the physical location. The complex map is maintained during the communications between the individual and the telecommuter.

In one embodiment, the virtual component may comprise an avatar representing the telecommuter's presence at the physical location. Similarly, the real component may also comprise an avatar representing the individual's presence at the physical location. Moreover, an avatar may be positioned at the physical location in order to represent the telecommuter's virtual presence at the physical location. This avatar may be an image avatar, acoustic avatar, remote control avatar, motion avatar or other type of avatar represented by ocular and aural cues. The telecommuter's actual location, i.e., satellite location, may be distal or proximate to the physical location. However, the individual and the telecommuter may be engaged in a planned interaction, impromptu interaction, or a spontaneous interaction mediated through the complex map. The physical location may be an office location such as a conference room, office, cubicle, hallway or break room. Alternatively, the physical location may be a library, public place, school, store, factory, or home.

In another aspect, the present invention is directed to a method for facilitating interaction between an individual present at a physical location and a telecommuter. The method includes the step of creating a complex map that includes a real component representing the individuals's presence at the physical location and a virtual component representing the telecommuter's presence at the physical location. The method also includes communicating between the individual and the telecommuter while maintaining the complex map.

In another aspect, the present invention is directed to a system for facilitating an individual's telecommute to a distal physical location. The system includes means for projecting an avatar that represents the individual's presence at the physical location onto the physical location. Also, means for effectuating communication between the physical location and the individual is included in the system.

In one embodiment, the means for projecting may comprise a speaker system that provides an aural cue indicative of the avatar, or real time video projection equipment that provides an ocular cue indicative of the avatar. The means for communicating may include a transponder that communicates the presence of an inhabitant positioned at the physical location to the individual, a wireless microphone that communicates the words of an inhabitant positioned at the physical location to the individual, or a white board that communicates images between the physical location and the individual. Additionally, a wireless notebook may be positioned at the physical location that enables communication between the physical location and the individual. A means for file sharing between the physical location and the individual may also be present.

### BRIEF DESCRIPTION OF THE DRAWINGS

The accompanying drawings are incorporated into and form a part of the specification to illustrate the preferred embodiments of the present invention. Various advantages and features of the invention will be understood from the following Detailed Description taken in connection with the appended claims and with reference to the attached drawing figures in which:

FIG. 1 depicts a schematic representation of a corporate workforce environment using a telecommuting system of the present invention for facilitating interaction between an individual present at a physical location and a telecommuter;

FIG. 2 depicts a functional block diagram illustrating a distributed network for effectuating the system for facilitating interaction between an individual present at a physical location and a telecommuter illustrated in FIG. 1;

FIG. 3 depicts a schematic diagram of one embodiment of a complex map employed in the system of the present invention that includes individuals and telecommuters interacting;

FIG. 4 depicts a schematic diagram of one embodiment of a planned interaction wherein individuals and telecommuters are capable of interacting in accordance with the teachings of the present invention;

FIG. 5 depicts a schematic diagram of one embodiment of an impromptu interaction wherein individuals and telecommuters are capable of interacting in accordance with the teachings of the present invention;

FIG. 6 depicts a schematic diagram illustrating one embodiment of a spontaneous interaction wherein individuals and telecommuters are capable of interacting in accordance with the teachings of the present invention;

FIG. 7 depicts a schematic diagram of one embodiment of a system for facilitating an individual's telecommuting session with respect to a distal physical location; and

FIG. 8 depicts a flow chart of the steps involved in one embodiment of a method for facilitating interaction between an individual present at a physical location and a telecommuter's avatar.

### DETAILED DESCRIPTION OF THE DRAWINGS

Presently preferred embodiments of the invention will now be described with reference to various examples of how the invention can best be made and used. Like reference numerals are used throughout the description and several views of the drawings to indicate like or corresponding parts, wherein the various elements are not necessarily drawn to scale.

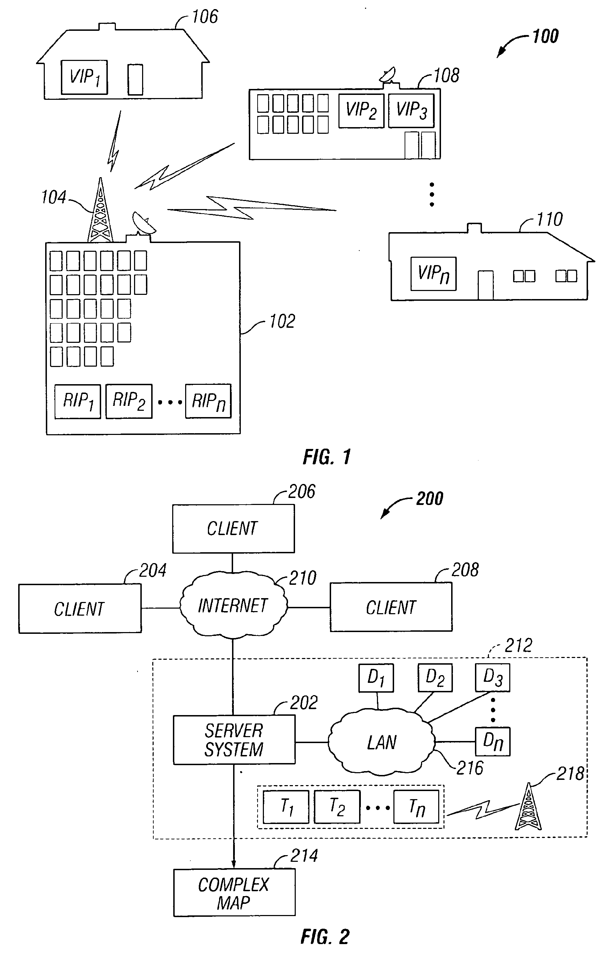

Referring now to the drawings, and more particularly to FIG. 1, there is shown an exemplary representation of a workforce telecommuting environment using a system 100 of the present invention for facilitating interaction between an individual present at a physical location and a telecommuter. Offices 102 serve as the center of daily operations for an organization, such as a corporation, business, professional organization, or branch of government. Real Individuals Present (RIPs), represented as RIP₁ through RIPₙ, have a physical presence at the offices 102 in order to carry out the affairs of the organization. Communications equipment 104 is associated with offices 102 to provide a system for sending and receiving voice and data communications between the offices 102 and teleoffices 106, 108, and 110. Each teleoffice may be another office, a telecenter or a private home with the appropriate equipment to enable one or more telecommuters to be Virtual Individuals Present (VIPs) at the offices 102. The VIPs, represented in FIG. 1 as VIP₁ through VIPₙ, have a virtual presence at the offices 102 in order to carry out the affairs of the organization. The systems and methods of the present invention disclosed herein provide a cooperative work scheme wherein any number of VIPs dispersed proximately or distally with respect to the offices 102 may participate in every aspect of office interaction. As will be described in detail hereinbelow, each of the VIPs may participate in planned interactions, impromptu interactions, and/or spontaneous interactions at the office. It should be appreciated that although FIG. 1 is described in relation to a working environment, the telecommuting schemes of the present invention may be employed in a variety of environments such as libraries, public places, schools, stores, factories, or homes, for example, wherein a variety of activities are taking place such as studying, socializing, shopping or working, for example. Similarly, by way of another example, the present invention may be employed in a home automation environment wherein a homeowner virtually visits his home to check on equipment such as thermostats, door locks, security devices and the like.

FIG. 2 depicts an exemplary distributed network 200 for effectuating an embodiment of the system 100 for facilitating interaction between an individual present at a physical location and a telecommuter illustrated in FIG. 1. The distributed network 200 includes a server system 202 and multiple client systems 204, 206, and 208. The server system 202 provides the server-based software applications that enable telecommuters present at the client systems 204, 206, and 208 to telecommute via a Wide Area Network (WAN) such as the Internet 210 to a physical environment 212 such as a workplace. Alternatively, the server system and multiple client systems may be connected by a direct connection such as a T1 line, for example. Each client system 204, 206, or 208 may include a multimedia computer system, such as a workstation, desktop, laptop computer, mid-level server, or personal digital assistant (PDA), for example. The server system 202 interfaces with devices, labeled D1, D2, ... Dn, via a local area network (LAN) 216 in the physical environment 212 of the offices to enable visual, audio, and data communications between the individuals present in the physical environment 212 and the telecommuters who are actually located at the client systems 204, 206, and 208. The devices connected to the server system 202 via LAN 216 are operable to project ocular and aural cues to create an avatar in the physical environment 212 that is indicative of the telecommuter's presence. Additionally, a base station 218 is associated with physical environment 212 to provide tracking information relative to transponders T1, T2, ..., Tn which may be positioned in a cellular arrangement with the base station 218. The server system 202 also provides a complex map 214 that has a real component representing individual's presence at the physical location and a virtual component representing the telecommuter's virtual presence at the physical location. As will be explained in further detail hereinbelow, the server system 202 integrates data from the physical environment and the client systems 204, 206, and 208 to form the complex map 214, which is an interactive diagram. Within the complex map, each real room is represented to scale and corresponds with a region of the physical environment in order to form the skeleton of the complex map. Each real room resides on one or more servers and each real room may be located on the network by a DNS- like protocol. To enable the complex map, the physical environment contains devices such as speakers and microphones, for example, that communicate with the server that provides the real room by a data network.

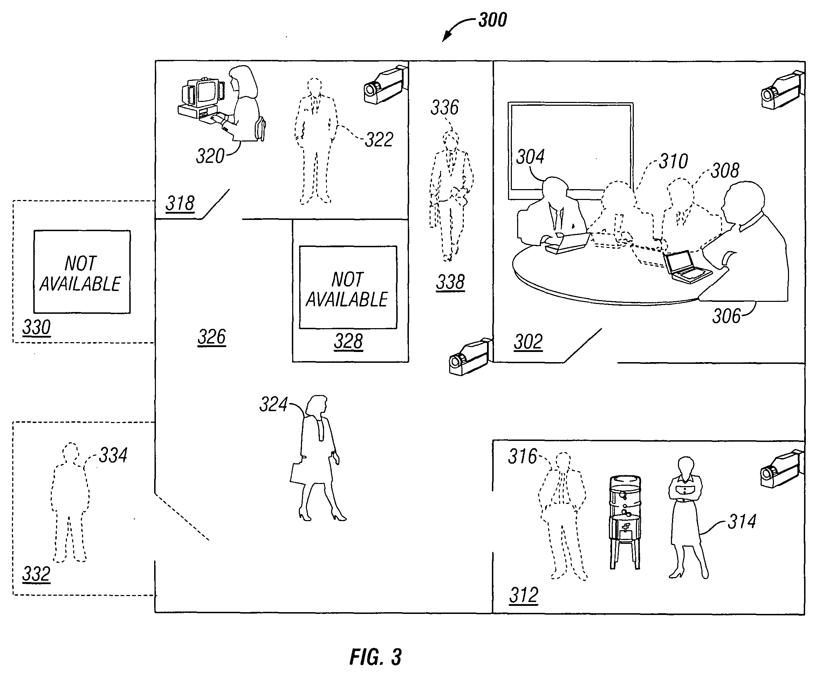

FIG. 3 depicts one embodiment of a complex map 300 employed in the system of the present invention that includes individuals and telecommuters interacting. The complex map 300 illustrates a portion of an office building wherein RIPs and VIPs, represented as avatars or graphical icons, are presented interacting and conducting the affairs of the organization. As illustrated, RIPs are represented by solid lined avatars and VIPs are represented as dashed lined avatars. Telecommuters and individuals physically present at the office building have access to the complex map 300 to facilitate interactions between individual's present at the physical office and telecommuters. In one embodiment, the complex map may contain real and virtual objects. The real objects may be represented to scale and the virtual objects, such as virtual telephones, and virtual doorways, for example, may be rendered at any scale. For example, a telecommuter may access the complex map 300 via a computer system from his remote location to interact with individuals at the office. Similarly, an individual physically present at the offices may access the complex map 300 via a computer to determine which VIPs and RIPs are present. Alternatively, the individual physically present at the offices may access the complex map 300 via one or more monitors mounted on the walls.

In a conference room 302, RIP avatars 304 and 306 and VIP avatars 308 and 310 interact in a planned interaction or meeting at a conference table. In a break room or corridor 312, a RIP avatar 314 and a VIP avatar 316 interact in a spontaneous interaction at a water cooler. In an office 318, a RIP avatar 320 and a VIP avatar 322 interact in an impromptu interaction. A RIP avatar 324 walks through a hallway 326 past an office 328 wherein a RIP is not available as indicated by the NOT AVAILABLE indication superimposed on the office 328. The RIP avatar 324 has also walked by a virtual office 330 which is occupied by an unavailable VIP and a virtual office 332 which is occupied by an available VIP avatar 334. As will be appreciated by one skilled in the art, the virtual offices 330 and 332 are not physically present at the indicated location in the office building, but represent offices of VIPs that may be distal to the office or located on another floor of the office building, across a city, or in another country, for example.

Each of the rooms and hallways displayed in the office may be managed by an interconnected hierarchical arrangement of servers employing a Domain Name System (DNS) protocol or similar structure known or heretofore yet undiscovered in the art. The infrastructure that enables the complex map 300 also enables VIPs and RIPs to indicate availability/unavailability for work-related reasons or security reasons, for example. It should be apparent that the present invention not only enables interactions between telecommuters and individuals present at physical locations, but the present invention also enables interactions between telecommuters and the physical premises. For example, a VIP avatar 336 is walking through hallway 338 and interacting with the physical office location. The VIP avatar 336 may be a security guard patrolling the physical location or a maintenance worker performing preventative maintenance, for example. Alternatively, the VIP avatar 336 may be a mobile agent or computer program that migrates from room to room, i.e. through the hierarchical server arrangement of rooms, performing specified tasks such as erasing white boards, data mining, monitoring suspicious avatar visitors, or the like.

Accordingly, the complex map of the present invention allows individuals to interact with other individuals and objects which may be far away in a manner that removes the distance. The complex map of the present invention allows physically-present individuals and virtually-present individuals to interact as if they were all physically-present. In the present invention, RIPs and VIPs are not required to sit immobile at workstations but may interact not only in special conference rooms, but also in offices, cubicles, hallways, and break rooms. Moreover, by using the system for facilitating interaction between an individual present at a physical location and a telecommuter of the present invention, an employer is able to employ workers over a larger geographical area and workers are able to find employment over a larger geographical area. To support these kinds of interactions, the complex map 300 employed includes representations of both real and virtual objects.

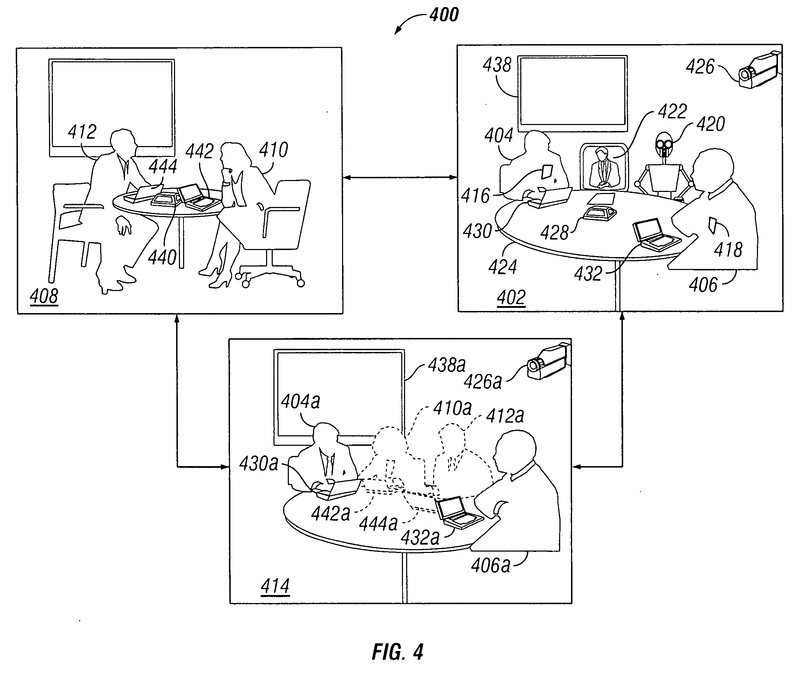

FIG. 4 depicts one embodiment of a planned interaction 400 wherein individuals and telecommuters are interacting with the aid of the teachings of the present invention. The planned interaction is taking place at a physical location 402 wired for telecommuting wherein two RIPs 404 and 406 are in attendance. Additionally, the planned interaction is being attended by telecommuters that are at satellite location 408 which may be a physical location distal to the physical location 402. The telecommuters are represented as VIPs 410 and 412. The physical location 402 and the satellite location 408 interface to form a complex map 414 wherein the RIPs 404 and 406 are represented as solid avatars 404a and 406a, respectively, and the VIPs 410 and 412 are represented as dashed avatars 410a and 412a, respectively. It should be appreciated that rendition schemes other than solid and dashed lines may be implemented to distinguish RIPs and VIPs. Additionally, under certain circumstances, it is possible for a person to be both a VIP and a RIP at the same time.

At the physical location 402, each of the RIPs 404 and 406 is equipped with a transponder that tracks the location of the RIP so that the RIP's location may be appropriately displayed on the complex map. The transponders may be wirelessly integrated into a data network of the server arrangement that is connected with the various physical locations. In one embodiment, the transponder may be discrete and incorporated into the RIP's clothing or identification badge. Additionally, each of the RIPs 404 and 406 is equipped with a wireless microphone for transmitting audio communications to the VIPs 410 and 412 in the satellite location 408. Similar to the transponder, the wireless microphone may be discrete and integrated into the RIP's clothing or identification badge. As illustrated, the transponder and microphone are integrated into identification badge 416 for RIP 404 and identification badge 418 for RIP 406.

At the physical location 402, the VIPs 410 and 412 are represented as hardware-assisted avatars which take the form of a robot avatar 420 which represents VIP 410 and a real-time image avatar 422 which represents VIP 412 by projecting an avatar's image and voice into a chair. Depending on the sophistication of the software and hardware that drives the avatars 420 and 422, the avatars 420 and 422 may display a variety of communicative behaviors that make the avatars 420 and 422 seem lifelike. It should be appreciated that the VIPs 410 and 412 may be represented at the physical location by other types of avatars such as acoustic-illusion avatars or pedestal avatars. In particular, the avatar may employ real time video or still images, remote-control computer-generated images, or motion capture technology, for example. A hardware assisted avatar, such as a pedestal avatar, may be employed that provides a video monitor, a camera, speakers and microphones. The monitor shows the icon, image, or avatar of a person virtually present in the room. The screen may be able to pan and tile under the control of the person who is virtually present. Additionally, if not enough pedestals are present for each avatar present, more than avatar may share a pedestal.

The RIPs 404 and 406 and VIPs 410 and 412 represented by avatars 420 and 422, respectively, are sitting around a conference table 424 in a media enriched conference room environment that incorporates design features for conducting teleconferences such as computer controllable video camera system 426, a microphone system represented in part by the microphones integrated into the badges 416 and 418, a speaker system represented in part by speakers 428, wireless notebook computers 430 and 432, and a video white board 438. Alternatively, other electronic devices may be employed, such as pads, in order to facilitate the exchange of data in a paperless office setting between virtually-present and physically-present individuals. The computer controllable video camera system 426 and microphone system communicate optical and audio information, respectively, about the physical location 402 that can be incorporated into the complex map 414 and accessed via user-accessible pull-down windows. The speaker system 428 relays audio information from the satellite location 408 to the physical location 402 to enable audio communication from the VIPs 410 and 412 to the RIPs 404 and 406. The notebook computers 430 and 432 and the white board 438 allow for sharing drawings.

At the satellite location 408, the VIPs 410 and 412 are positioned in a conference room having a microphone system and a speaker system, represented as sound system 440, to enable aural communications with the RIPs 404 and 406 at physical location 402. Each VIP 410 and 412 has a pen-based notebook computer 442 and 444, respectively, running client software that enables remote access with the other VIP and the pen-based notebook computers 430 and 432 of the RIPs. For example, VIP 410 may send data stored on wireless notebook computer 442 to the wireless notebook computer 444 of VIP 412, the wireless notebook computer 430 of RIP 404, and the wireless notebook computer 432 of RIP 406. It should be appreciated that other electronic equipment, such as scanners and printers, may be present to facilitate document exchange between physically-present and virtually-present individuals. It should be appreciated that although the VIPs 410 and 412 are illustrated within the same room, VIPs 410 and 412 may be located in different rooms during the teleconference with physical location 402.

The complex map 414 illustrates a representation of the physical location 402 as well as a representation of the participants of the conference superimposed onto the representation of the physical location 402. As discussed, the RIPs 404 and 406 and VIPs 410 and 412 are represented as solid avatars 404a and 406a (the real component of the complex map) and virtual avatars 410a and 412a (the virtual component of the complex map), respectively. Additionally, several physical objects from the conference are displayed including a video camera 426a which represents the video camera 426 of the physical location 402. Pads 430a, 432a, 442a, and 444a positioned on conference table 424a are representative of computers 430, 432, 442, and 444, respectively. A white board 438a is a rendition of white board 438. It should be appreciated that although VIPS 410 and 412 are sitting, the avatars 410a and 412a representing VIPs 410 and 412, respectively, may be at any location in the complex map 414.

As previously discussed, the complex map 414 is viewable by the VIPs 410 and 412 and the RIPs 404 and 406 via their respective white board or notebook computer equipment, for example. By having access to the complex map which integrates a real component representative of the physical location and a virtual component representative of the satellite location, life-like interaction may be enabled between the RIPs 404 and 406 and the VIPs 410 and 412. Moreover, the presentation provided by the complex map 414 is customizable and personal. For example, VIP 412 may look around the physical location 402 by clicking on the representation of the video equipment 426a and moving the video equipment 426a to acquire the desired view of the physical location 402. In addition to providing a visual and audio representation of the planned interaction 400, the complex map 414 enables file and data sharing. For example, the VIP 410 who is attending the conference may view a handout that the RIP 406 has brought to the interaction by clicking on the representation of RIP's computer 432a.

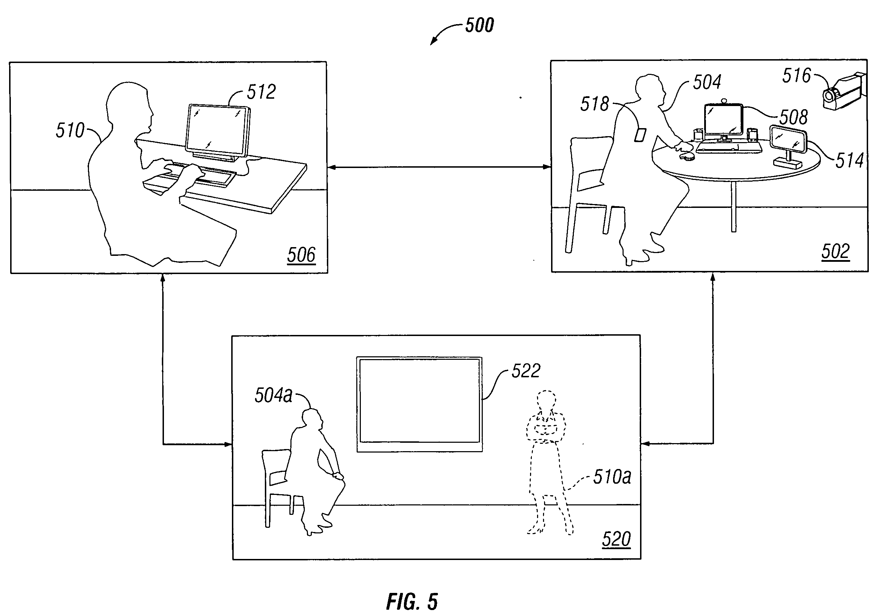

FIG. 5 depicts one embodiment of an impromptu interaction 500 wherein individuals and telecommuters are capable of interacting in accordance with the teachings of the present invention. At a physical location 502, a RIP 504 and a telecommuter who is physically present at a distal location 506 are having an impromptu interaction that was organized without much preparation or advanced planning. As illustrated, the physical location 502 is an individual's office having a workstation 508 with multimedia capabilities. A VIP 510 working on a multimedia-enriched workstation 512 at distal location 506 is represented in the physical location 502 by a pedestal avatar 514. The pedestal avatar 514 facilitates the RIP's interaction with the VIP. Similar to RIPs 404 and 406, RIP 504 is equipped with a badge 518 that includes an integrated transponder and microphone. Additionally, the physical location includes a video system 516 that facilitates the VIP's interaction with the RIP.

A complex map 520 includes an avatar 504a (the real component) which is representative of RIP 504 and an avatar 510a (the virtual component) which is representative of VIP 510. The complex map 520 is accessible by both the RIP 504 and VIP 510 via the workstations 508 and 512, respectively, to facilitate interaction. Additionally, the complex map 520 includes a monitor 522 that reflects the contents of the monitor 508 of the workstation 508. The workstations 508 and 510 in conjunction with the monitor 522 facilitate audio, visual, file, and data sharing between the RIP 504 and VIP 510. It should be appreciated that although the impromptu interaction has been presented as occurring between one VIP and one RIP, it should be appreciated that the impromptu office interaction may be attended by any combination of RIPs and VIPs.

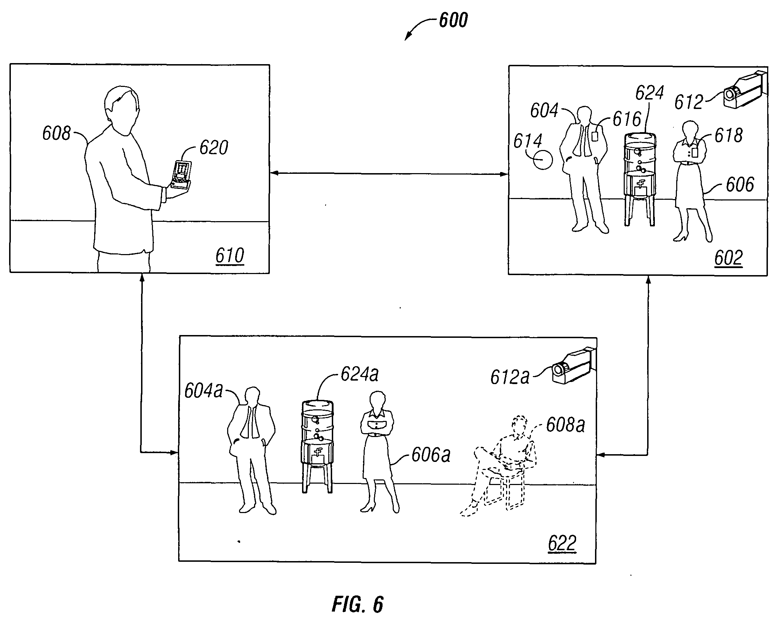

FIG. 6 depicts one embodiment of a spontaneous interaction 600 wherein individuals and telecommuters are capable of interacting in accordance with the teachings of the present invention. At a physical location 602, RIPs 604 and 606 are having a spontaneous interaction near a water cooler 624 in a break room. The spontaneous interaction is occurring without any premeditation or prior effort, and happens to take place when the RIPs 604 and 606 are both present in the break room at the same time. The RIPs 604 and 606 are joined by a VIP 608 that is at a satellite location 610 which is away from the physical location 602. The physical location 602 is equipped with an integrated camera and image projector 612 that projects an avatar 614, which represents VIP 608, in the form of a giant spot onto the wall of the break room. A speaker system is integrated into the image projector 612 for communicating the VIP's speech to the RIPs 604 and 606. As with the previous RIPs, RIPs 604 and 606 each have a microphone and transponder integrated into badges 616 and 618, respectively, for transmitting the RIP's speech and location.

The VIP 608 is located at a park and is using an enriched PDA 620 having at least a microphone, a speaker, and a display to attend the spontaneous interaction. The display enables the VIP to view a complex map 622 which includes a representation of the physical location 602 that includes an icon 624a of the water cooler 624. Avatars 604a, 606a, and 608a represent RIP 604, RIP 606, and VIP 608, respectively. A camera 612a is representative of the integrated camera and video projector 612 of the physical location 602. The complex map 622 enables the VIP 608 to view the spontaneous interaction session and interact with RIPs 604 and 606. In one embodiment of a scenario, the VIP 608 may monitor a complex map similar to the complex map 300 of FIG. 3, when he notices the spontaneous interaction occurring in the break room and decides to join by clicking on a representation of the break room. By enabling the telecommuters to participate and initiate informal interactions, the present invention not only increases worker productivity but bolsters the social interaction and cohesiveness of the telecommuting organization. It should be appreciated that although the spontaneous interaction has been presented as being initiated by the RIPs and attended by the VIP, a spontaneous interaction may be initiated by a VIP and attended by any combination of RIPs and VIPs.

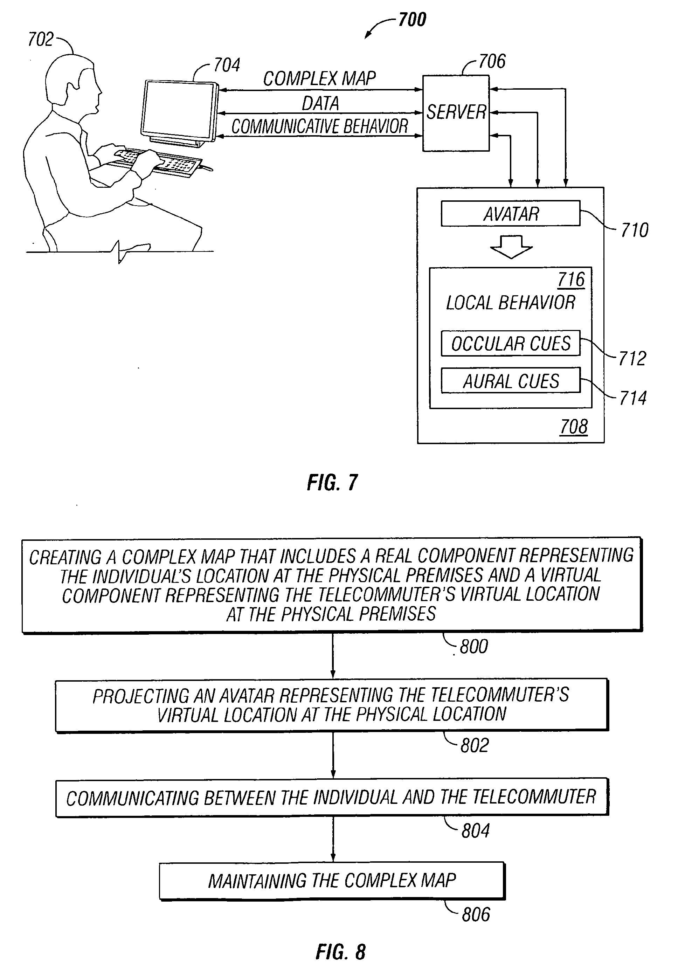

FIG. 7 depicts one embodiment of a system 700 for facilitating an individual's telecommuting session with respect to a distal physical location. A telecommuter 702 is positioned at a workstation 704 having multimedia capabilities that is in communication with a server 706 that is associated with a physical location 708. As illustrated, the workstation 704 is a personal computer system that enables the telecommuter 702 to work from home and may include any number of peripheral input, storage, multimedia and display devices such as a keyboard, a monitor, a speaker system, a microphone, and video conference equipment. It should be appreciated, however, that only a computer having client software is required to enable the telecommuter 702 to telecommute. The workstation 704 includes software that enables the telecommuter 702 to control the motion, communications, and settings, collectively the communicative behavior, of the telecommuter's avatar 710 which is projected onto the physical location 708. Additionally, the workstation 704 and server 706 enable the telecommuter to view the complex map and send and receive data relevant to the interaction occurring. The avatar's presence in the physical location 708 is manifested by ocular cues 712 and aural cues 714 which are indicative of local behavior 716 of the avatar. The ocular cues 712 and aural cues 714 not only indicate the telecommuter's presence in the physical environment 708, but serve to pinpoint the telecommuter's location as well.

For example, the avatar may be manifested by video projection equipment that projects an icon indicative of the telecommuter and a speaker system which projects the speech of the telecommuter. In this example, the telecommuter may control the avatar's movement with the arrow pad of a keyboard. A series of keyboard commands may control the animated geometry of the avatar which would provide indications of communicative behaviors such as happiness, curiosity, or willingness to engage in conversation, for example.

FIG. 8 depicts a flow chart illustrating one embodiment of a method for facilitating interaction between an individual present at a physical location and a telecommuter's avatar. At block 800, a complex map is created that includes a real component representing the individual's real location at the physical premises and a virtual component. At block 802, the telecommuter's satellite location is represented at the physical location. As previously discussed, an avatar representing the telecommuter's satellite location at the physical location may be projected onto the physical location. At block 804, the individual and the telecommuter communicate while the complex map is maintained (block 806).

Based on the foregoing, it should be recognized that the present invention enables a flexible workplace arrangement that can reduce the stress and increase the free time of employees while providing a scheme that enables employees telecommuting to participate in all the traditional interactions at a workplace, i.e., planned, impromptu, and spontaneous interactions. In particular, the present invention enables telecommuting workers to participate and initiate in all the formal and informal activities that physically-present workers participate, such as spontaneous "hall conferences" and impromptu "drop by" conversations.

Although the invention has been described with reference to certain exemplary embodiments, it is to be understood that the forms of the invention shown and described are to be treated as presently preferred exemplary embodiments only. Various changes, substitutions and modifications can be realized without departing from the spirit and scope of the invention as defined by the appended claims.

## Claims

1. A system for facilitating interaction between an individual present at a physical location and a telecommuter, comprising:
means for creating a complex map that includes a real component representing at least said individual's presence at said physical location and a virtual component representing at least said telecommuter's virtual presence at said physical location;
means for maintaining said complex map; and
means for effectuating communication between said individual and said telecommuter.

2. A method for facilitating interaction between an individual present at a physical location and a telecommuter, comprising:
creating a complex map that includes a real component representing said individual's presence at said physical location and a virtual component representing said telecommuter's presence at said physical location;
communicating between said individual and said telecommuter; and
maintaining said complex map.

3. The method as recited in claim 2, further comprising creating an avatar representative of said telecommuter's presence at said physical location.

4. The method as recited in claim 3, further comprising providing ocular cues indicative of said avatar's presence.

5. The method as recited in claim 3, further comprising providing aural cues indicative of said avatar's presence.

6. The method as recited in claim 2, wherein the operation of communicating between said individual and said telecommuter further comprises communicating between said individual and said telecommuter engaged in a planned interaction.

7. The method as recited in claim 2, wherein the operation of commuting between said individual and said telecommuter further comprises communicating between said individual and said telecommuter engaged in an impromptu interaction.

8. The method as recited in claim 2, wherein the operation of commuting between said individual and said telecommuter further comprises communicating between said individual and said telecommuter engaged in a spontaneous interaction.

9. The method as recited in claim 2, wherein said physical location is selected from the office group consisting of conference rooms, offices, cubicles, hallways, and break rooms.

10. The method as recited in claim 2, wherein said physical location is selected from the group consisting of libraries, public places, schools, stores, factories, and homes.
